# EUROPEAN PATENT APPLICATION

(11) **EP 1 544 715 A1**
(43) Date of publication of application: **22.06.2005**
(21) Application number: 03028691.8
(22) Date of filing: 16.12.2003
(51) Int. Cl.: G06F 1/18

(54) **Expansion structure of disk driver frame**

(71) Applicant: Shuttle Inc., Nei-Hu Dist., Taipei (TW)
(72) Inventor: Chen, Yin Hung, Taipei (TW)
(74) Representative: TER MEER STEINMEISTER & PARTNER GbR

(57) **Abstract**

An expansion structure is used to attach a first disk driver frame to a second disk driver or a computer housing. Each of the first and second disk driver frames includes an elongate hollow rectangular enclosure, projecting from which the top surface are a pair of sliding members and a pair of pressing members aligned with the sliding members. The bottom surface of each enclosure also has a pair of guiding members aligned with the sliding members allowing the sliding members of the neighboring disk driver frame to slide therein. The computer housing has a planar plate on which a pair of guiding members is formed, such that the sliding members of the first or second disk driver frame can slide therein, and the first or second driver frame is slidably and stably attached to the computer housing.

## Description

### BACKGROUND OF THE INVENTION

The present invention relates to an expansion structure of disk driver frame, and more particular, to an expansion structure of a disk driver frame slidably installed in an enclosure of a computer, such that it is more convenient for inspecting, changing or expanding of the disk driver.

The fast development of information techniques continuously updates designs and devices of computer and peripherals of computer. As a consequence, the access capacitance of the memory and disk drive has been increased to enhance the operation efficiency. The popular multi-media and 3D graphic design further occupy a great amount of the access space. Therefore, expansion structure of a disk driver frame becomes very demanding.

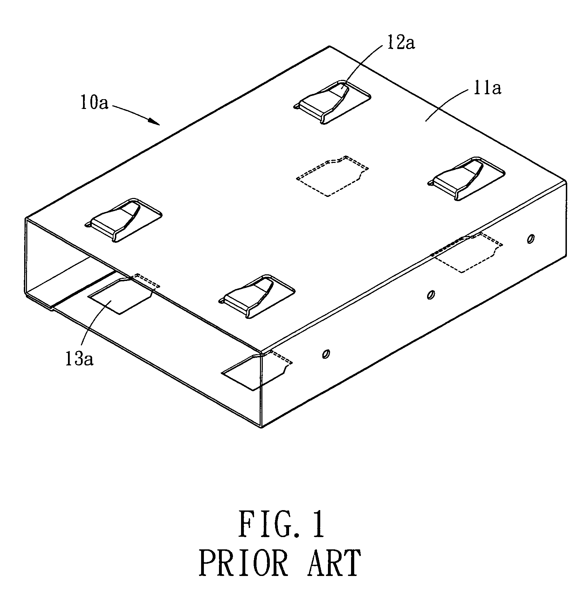

Figure 1 shows a conventional frame of a disk driver. The frame 10a includes a hollow enclosure 11a. The top surface of the enclosure 11a includes a plurality of hooks 12a, and the bottom surface of the enclosure 11a includes a plurality of slots 13a aligned with the hooks 12a, such that the neighboring frames 10a can be secured to each other by fastening the hooks 12a with the corresponding the slots 13a of the frames 10a placed on top.

The above frame has the following drawbacks:
(1) The expansion structures of the frames do not include any guiding design, such that it is difficult to align the hooks 12a with the slots 13a of the neighboring frame. Further, as the area of the hooks 12a is small, the connecting strength is in sufficient. The hooks 12a are easily deformed to degrade the connection after several times of reassembly.
(2) Under the consideration of assembly convenience and processing tolerance, larger spaces are reserved while fabricating the hooks 12a and the slots 13a. Therefore, stability of the assembled disk drivers is greatly affected.

### BRIEF SUMMARY OF THE INVENTION

The present invention provides an expansion structure for a disk driver frame which uses a pair of sliding members formed on a top surface of the frame to precisely secure and position the disk driver frame with a computer housing or another disk driver frame.

The present invention provides an expansion structure for a disk driver frame. The expansion structure allows the disk driver frame slidably attached to a computer housing, such that it is convenient for inspecting, changing or expanding the disk driver.

The expansion structure provided by the present invention allows for a first disk driver frame attached to a second disk driver or a computer housing. Each of the first and second disk driver frames includes an elongate hollow rectangular enclosure, projecting from which the top surface are a pair of sliding members and a pair of pressing members aligned with the sliding members. The bottom surface of each enclosure also has a pair of guiding members aligned with the sliding members allowing the sliding members of the neighboring disk driver frame to slide therein. The computer housing has a planar plate on which a pair of guiding members is formed, such that the sliding members of the first or second disk driver frame can slide therein, and the first or second driver frame is slidably and stably attached to the computer housing.

These and other objectives of the present invention will become obvious to those of ordinary skill in the art after reading the following detailed description of preferred embodiments.

It is to be understood that both the foregoing general description and the following detailed description are exemplary, and are intended to provide further explanation of the invention as claimed

### BRIEF DESCRIPTION OF THE DRAWINGS

These, as well as other features of the present invention, will become apparent upon reference to the drawings wherein:
Figures 1 shows a perspective view of a conventional frame of a disk driver;
Figure 2 shows a perspective view of a frame of a disk driver;
Figure 3 shows a perspective view of Figure 2 from another viewing angle;
Figure 4 shows an exploded view of a computer enclosure and the frame;
Figure 5 shows an exploded view of a disk driver frame in another embodiment; and
Figure 6 shows the assembly of the disk driver frame as illustrated in Figure 5.

### DETAILED DESCRIPTION OF THE INVENTION

Reference will now be made in detail to the preferred embodiments of the present invention, examples of which are illustrated in the accompanying drawings. Wherever possible, the same reference numbers are used in the drawings and the description to refer to the same or like parts.

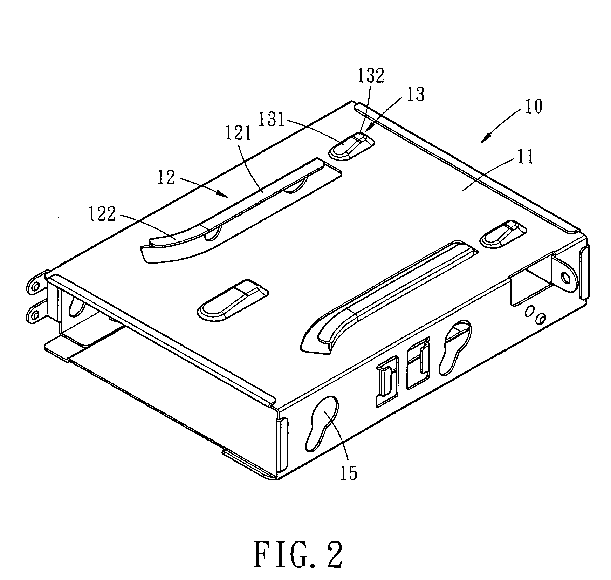

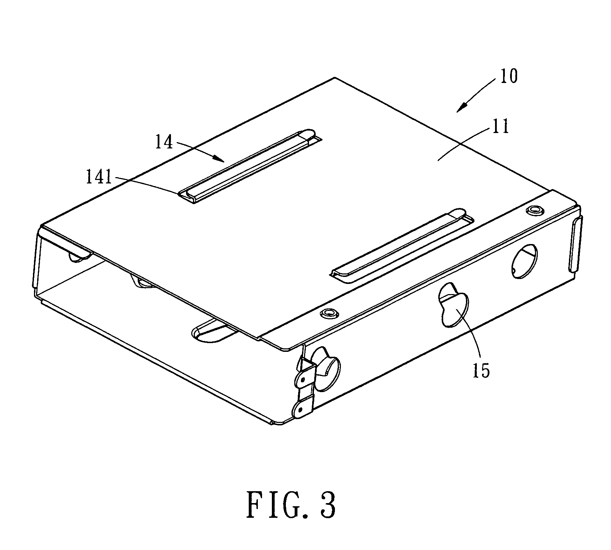

Figures 2 and 3 illustrate perspective views of an expansion frame from different viewing angles. The disk driver frame 10 may includes allows a hard disk with a height of 1.6" and a width of 5.25", or a height of 1" and a width of 3.5" to be installed therein. The frame 10 includes a rectangular elongate enclosure 11, of which a top surface includes two symmetric sliding structures 12 extending along an elongate direction of the enclosure 11. Each of the sliding structures 12 includes an elongate latching member 121 projecting from the top surface of the enclosure 11 and an opening underneath the latching member 121. One end of each latching member 121 is bent or curved outwardly, such that a pair of a curved portion 122 extending towards opposite directions is formed. The top surface further comprises a pair of pressing member 13 with a height substantially the same as that of the sliding structures 12. Each of the pressing members 13 includes a slanted surface 131 extending from the top surface and a horizontal pressing surface 132 extending from a top edge of the slanted surface 131. The bottom surface of the enclosure 11 includes a pair of guiding members 14 and a pair of slots 141 formed by the guiding members 14 and the bottom surface. Depending on the configuration of the latching members 12, the openings of the slots 141 can face inwardly towards each other or outwardly opposite to each other. The enclosure 11 further comprises a pair of opposing sidewalls perforated with a plurality of through holes 15.

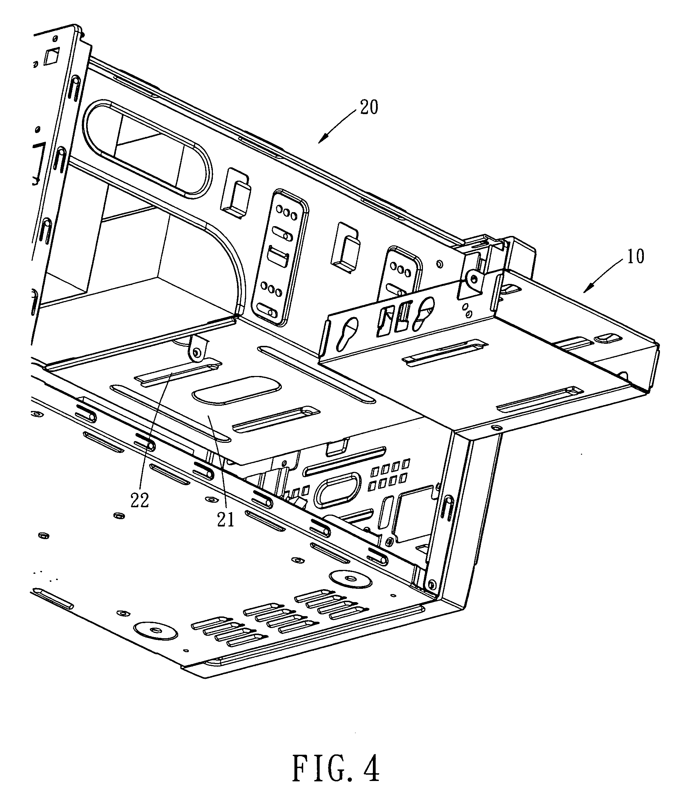

Figure 4 shows an exploded view of a computer housing 20 and a disk driver frame provided by the present invention. As shown, the computer housing 20 includes a planar plate 21 which includes a pair of guiding slots 22 similar to the guiding members 14. The guiding slots 22 allow the sliding members 12 of the disk driver frame 10 to slide therein, such that the disk driver frame 10 is installed in the computer housing 20. A disk driver can then installed in the disk driver frame 10 and fastened thereto by engaging fasteners such as screw drivers with the sidewalls through the holes 15. During assembly, the rear portion of the disk driver frame 10 can be pressed slanted downwardly such that the disk driver frame can be pushed into the computer housing 20 with the slanted surface 131 placed horizontally, such that the curved portion 122 of the sliding structure 12 guides the disk driver frame 10 to an upright position. The latching members 121 are inserted into the slots 141 of the guiding members 14, while the pressing surfaces 132 of the pressing members 13 are pressed in contact with the planar plate 21 to stably secure the disk driver frame with the planar plate 21.

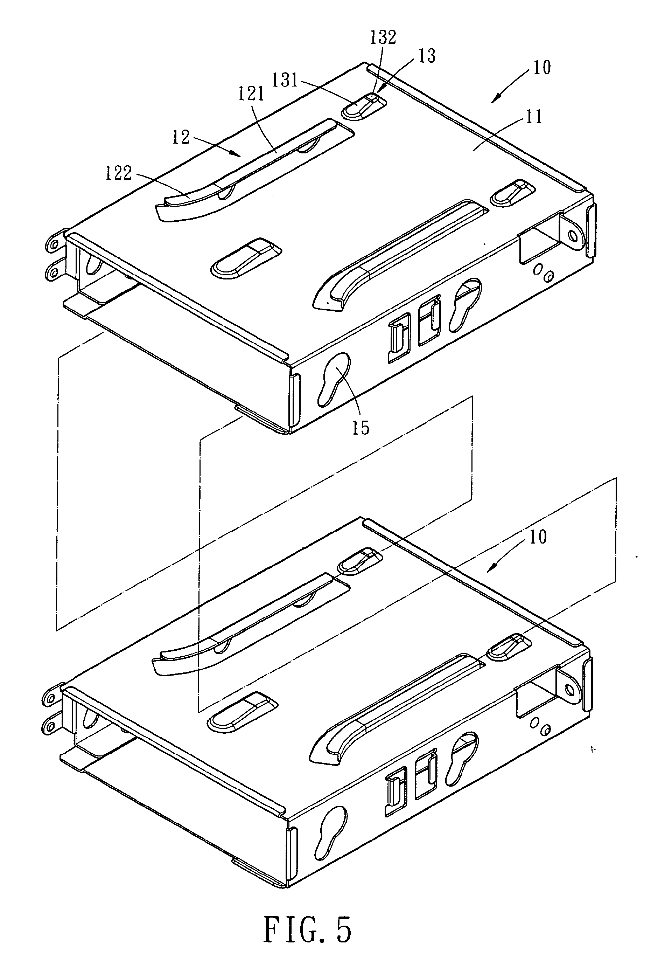

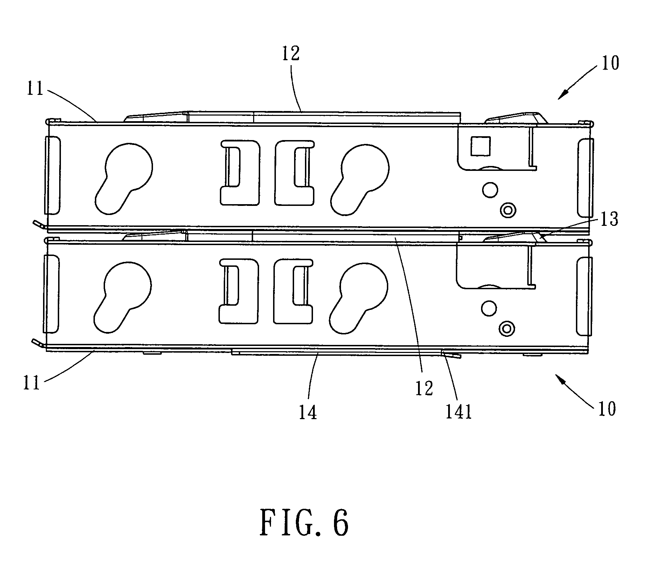

Figures 5 and 6 show exploded view and cross sectional view of multiple disk driver frames 10 stacked with each other and mounted on the planar plate 21 of the computer housing 20. The guiding members 14 of a disk driver frame 10 allow the sliding members 12 of another disk driver frame 10 to slide therein. The latching members 121 of the sliding structures 12 are received in the slots 141 of the guiding members 14, while the pressing surface 132 presses the disk driver 10 against the planar plate 21.

Accordingly, the expansion structure of the disk driver frame provided by the present invention has the following advantages.
1. The sliding members and the guiding members are slidably attached with each other, such that the disk driver can be installed, inspected, changed or expanded easily.
2. The curved portion of the sliding members form a wider entrance such that the disk driver frame is easily guided into the guiding slots of the computer housing.
3. The slanting surfaces of the pressing members allow the disk driver frame easily inserted into the housing, while the horizontal surfaces of the pressing members pressed against the planar plates of the computer housing provide a stable assembly.

This disclosure provides exemplary embodiments of the present invention. The scope of this disclosure is not limited by these exemplary embodiments. Numerous variations, whether explicitly provided for by the specification or implied by the specification, such as variations in shape, structure, dimension, type of material or manufacturing process may be implemented by one of skill in the art in view of this disclosure.

## Claims

1. An expansion structure for a disk driver frame, allowing a first disk driver frame secured to a computer housing or connected to a second disk driver frame, the expansion structure includes a pair of sliding members projecting from top surface of each of the first and second disk driver frames, a pair of pressing members formed on the top surfaces and aligned with the sliding members, and a pair of guiding members formed on bottom surfaces of the first and second disk frames and aligned with the sliding members.

2. The structure of Claim 1, wherein each of the first and second disk driver frames includes a rectangular elongate enclosure.

3. The structure of Claim 1, wherein the sliding members extends symmetrically with each other along an elongate direction of the top surfaces.

4. The structure of Claim 1, wherein each pair of the sliding members and each of the top surfaces forms a pair of slots.

5. The structure of Claim 4, wherein each pair of the slots are open towards each other or opposite to each other.

6. The structure of Claim 1, wherein each pair of the sliding members includes a pair of curves portions extending from one ends of the sliding members, and each of the guiding members includes a slots allowing the corresponding sliding member to slide therein.

7. The structure of Claim 6, wherein the slots of each pair of guiding members are open towards each other or opposite to each other.

8. The structure of Claim 1, wherein the pressing members have a height the same as that of the sliding members.

9. The structure of Claim 1, wherein each pressing member includes a slanting surface extending from the top surface of the enclosure and a horizontal surface extending from the top edge of the slanting surface.

10. The structure of Claim 1, wherein the computer housing further comprises a planar plate on which a pair of guiding slots are formed allowing the sliding members to slide therein.
